(19) Europäisches Patentamt

European Patent Office

Office européen des brevets

(11) EP 0 627 305 B1

(12) EUROPÄISCHE PATENTSCHRIFT

(45) Veröffentlichungstag und Bekanntmachung des Hinweises auf die Patenterteilung:
04.08.2004 Patentblatt 2004/32

(51) Int Cl.⁷: **B32B 27/32**, B29C 55/02, B65D 65/40

(21) Anmeldenummer: 94107938.6

(22) Anmeldetag: 24.05.1994

(54) **Harzhaltige, biaxial orientierte Polypropylen-Mehrschichtfolie, Verfahren zu ihrer Herstellung und ihre Verwendung**

Biaxially oriented polypropylene multilayer film containing a resin, its process of fabrication and its use

Film multicouche en polypropylène biaxiallement orienté contenant une résine, son procédé de fabrication et son utilisation

(84) Benannte Vertragsstaaten:
BE DE ES FR GB IT NL

(30) Priorität: 29.05.1993 DE 4318031

(43) Veröffentlichungstag der Anmeldung:
07.12.1994 Patentblatt 1994/49

(73) Patentinhaber: Trespaphan GmbH & Co. KG
65479 Raunheim (DE)

(72) Erfinder:
• Peiffer, Herbert, Dr.
D-55126 Mainz (DE)
• Murschall, Ursula, Dr.
D-55283 Nierstein (DE)
• Dries, Thomas, Dr.
D-55270 Schwabenheim (DE)
• Schlögl, Gunter, Dr.
D-65779 Kelkheim (DE)

(74) Vertreter: Luderschmidt, Schüler & Partner GbR
Patentanwälte,
Postfach 3929
65029 Wiesbaden (DE)

(56) Entgegenhaltungen:
EP-A- 0 479 101          EP-A- 0 488 010
EP-A- 0 614 756          US-A- 4 921 749
US-A- 5 213 744

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft eine Polypropylen-Mehrschichtfolie, welche mindestens eine Basisschicht, enthaltend Polypropylen und Kohlenwasserstoffharz, und mindestens eine Deckschicht umfaßt, welche α-olefinische Polymere mit 2 bis 10 Kohlenstoffatomen enthält.

Die erfindungsgemäße Folie zeichnet sich durch ein gutes Twistverhalten und sehr gute Migrationseigenschaften aus.

Die Erfindung betrifft ferner ein Verfahren zur Herstellung der Mehrschichtfolie sowie ihre Verwendung.

Eine besondere Art des Verschlusses von Volleinschlägen zum Zwecke der Verpackung von Verpackungsgütern ist das Drehen oder Wrappen. Bekannt ist dieses Verfahren der Verpackung insbesondere beim Volleinschlag kleinerer Verpackungsgüter, wobei bevorzugt runde oder annähernd runde Gegenstände wie Bonbons, Flaschen, Kerzen, Dropsrollen, Schokoladen- und Marzipanriegel, Ostereier oder ähnliches häufig auf diese Art verpackt werden.

Voraussetzung für den Einsatz der Folie in diesem Anwendungsgebiet ist ihr Drehvermögen. Die Rückstellkräfte in der Folie dürfen nicht dazu führen, daß sich nach dem Twisten der Zwickel wieder zurückdreht, wodurch das eingepackte Gut leicht herausfallen kann. Nach dem Stand der Technik wird für den Dreheinschlag vorwiegend Zellglas, also regenerierte Zellulose, nicht orientiertes Polypropylen oder PVC-Folie verwendet, siehe "Verpacken mit Kunststoffen" von Günther Kühne, herausgegeben 1974, Carl-Hanser-Verlag, München, Seite 63.

In neuester Zeit wurden verschiedentlich biaxial orientierte Polypropylenfolien für die Dreheinschlagsanwendung vorgeschlagen, welche zur Erzielung der gewünschten Dreheigenschaften ein niedermolekulares Harz enthalten. Diese bekannten Dreheinschlagsfolien sind verbesserungsbedürftig bezüglich ihres Migrationsverhaltens.

Die DE-C-20 45 115 beschreibt die Verwendung hydrierter Polymerisatgemische in trägerlosen Folien, wobei die hydrierten, vinylaromatischen Kohlenwasserstoffharze eine derartige Verteilung des mittleren Molekulargewichts aufweisen, daß nicht mehr als etwa 15 % des Polymerisats ein Molekulargewicht (Mw) außerhalb des Bereichs von 600 bis 20 000 besitzt. Es ist beschrieben, daß die Verträglichkeit des Harzes mit einem Mw von mehr als 20 000 stark abnimmt und Material mit einem Mw von unterhalb 600 die Folie klebrig macht. Innerhalb des Bereichs von 600 bis 20 000 ist das mittlere Molekulargewicht nicht kritisch. Der Harzzusatz verleiht dem Polyolefin Heißsiegelfähigkeit, welches selbst gar nicht oder nur schwer siegelbar ist.

In der GB-A-1 231 861 wird eine boPP-Folie beschrieben, die eine gute Drehfähigkeit besitzt. Diese erhält die Folie durch Ausrüstung des Propylenhomopolymeren mit einem niedrigmolekularen Harz und durch eine bevorzugte Orientierung in Maschinenrichtung. Als niedrigmolekulare Harze werden Terpenpolymere, kompatible hydrierte Kohlenwasserstoffharze oder kompatible Rosins beschrieben. Die Harze werden durch ihr Molekulargewicht, durch ihre Erweichungstemperatur und durch ihre Jodzahl gekennzeichnet. Zum Einsatz kommen danach bevorzugt solche Harze, die ein Molekulargewicht von größer 600, eine Erweichungstemperatur von größer 100 °C und eine Jodzahl von kleiner 15 aufweisen. Als ein typisches Harz wird z. B. Picopale 100 mit einem Molekulargewicht von ca. 1 170, einer Erweichungstemperatur von ca. 100 °C und einer Jodzahl von 200 genannt.

Die beschriebenen Harze sind mit dem Propylenhomopolymeren sehr gut verträglich und können zu guten mechanischen Eigenschaften und sehr guten Twisteigenschaften beitragen.

Das im Vergleich zum Propylenhomopolymeren sehr niedrigmolekulare Harz weist bezüglich der Herstellung, der Verarbeitung und der Verwendung in Polypropylenfolien große Nachteile auf. Das Harz neigt zum Entmischen und diffundiert an die Oberfläche der Folie. Beim Herstellungsprozeß kann dies eine erhöhte Klebeneigung oder Ablagerung des Harzes z. B. auf Walzen zur Folge haben. Bei der Verarbeitung neigen die eingepackten Bonbons zum Verblocken, wodurch deren Weitertransport verhindert oder eingeschränkt ist.

Beim Kontakt der Folie mit Füllgut, insbesondere mit fetthaltigem Füllgut, tritt ein weiterer schwerwiegender Nachteil der niedrigmolekularen Harze auf. Das Harz migriert schon nach kurzer Zeit in das Lebensmittel, was nach lebensmittelrechtlichen Bestimmungen nicht zulässig ist. Daher sind Folien, welche solche migrierenden niedrigmolekularen Harze enthalten, für die Verpackung fetthaltiger Nahrungsmittel nicht zu verwenden.

In der EP-A-0 217 388 wird eine Folie beschrieben, die sich ebenfalls durch gute Twisteigenschaften auszeichnet. Zur Erzielung des guten Twistverhaltens wird dem Propylenhomopolymeren in der Basisschicht ein niedrigmolekulares Harz zugegeben. Daneben werden die Verfahrensbedingungen so gewählt, daß der E-Modul in beiden Orientierungsrichtungen größer als 3 000 N/mm$^2$ ist. Im Beispiel wird als Harz Arkon P 125 angegeben, das ein Molekulargewicht von ca. 1 000 aufweist und einen Erweichungspunkt von 125 °C hat. Neben den zuvor genannten Vorteilen weist dieses Harz deutliche Nachteile bei der Folienherstellung, bei der Folienverarbeitung und beim Kontakt der Folie mit fetthaltigen Lebensmitteln auf.

Obwohl die beschriebenen Folien mit nicht harzhaltigen Deckschichten abgedeckt sind, findet bereits beim Kontakt mit heißen Walzen (z. B. bei der Längsstreckung) eine so starke Diffusion des Harzes an die Oberfläche der Folie statt, daß es relativ schnell zu Ablagerungen des Harzes an den Walzenoberflächen kommen kann. Die Maschine muß häufig geputzt werden, was einen deutlichen Kapazitätsverlust zur Folge haben kann.

Weiterhin ist auch bei diesen Harzen das Migrationsverhalten sehr ausgeprägt. Bei Kontakt der Folie mit Fett ist z. B. nach einer Prüfdauer von 10 Tagen und einer Prüftemperatur von 40 °C praktisch das gesamte in der Folie enthaltene Harz in das Fett migriert.

In der GB-A-2 055 688 wird eine mehrschichtige siegelfähige, transparente boPP-Folie mit guten mechanischen Eigenschaften und guten Siegeleigenschaften beschrieben. Zur Verbesserung der mechanischen Eigenschaften enthält die Basisschicht neben Propylenhomopolymeren ein niedrigmolekulares Harz. Der Harzanteil beträgt 2 bis 20 Gew.-%. Die Deckschichten bestehen im wesentlichen aus einer Mischung von mindestens zwei Copolymeren, die eine exzellente Siegelbarkeit der Folie ergeben. Die Folie wird biaxial verstreckt, wobei sowohl die Stufenstreckung als auch die Simultanstreckung angewendet werden. Letztere Streckart ist teuer, kann aber zu guten Twisteigenschaften der Folie führen. In den Beispielen wird als Harz Arkon P 125 angegeben, das ein Molekulargewicht von ca. 1 000 aufweist und daher die vorstehend beschriebenen extremen Nachteile bezüglich Diffusions- und Migrationsverhalten aufweist.

In der GB-A-2 028 168 wird eine siegelfähige boPP-Folie mit sehr guten mechanischen Eigenschaften beschrieben. Zur Verbesserung der mechanischen Eigenschaften enthält die Basisschicht zusätzlich zum Propylenhomopolymeren ein niedrigmolekulares Kohlenwasserstoffharz. Der Harzanteil beträgt 1 bis 50 Gew.-%. Das verwendete Harz hat ein Molekulargewicht von größer als 600, vorzugsweise 1 000, und einen Erweichungspunkt von größer als 70 °C. Aufgrund des relativ niedrigen Molekulargewichts des verwendeten Harzes werden die zuvor beschriebenen Nachteile erwartet.

In der US-A-4,921,749 wird eine siegelfähige boPP-Folie mit verbesserten mechanischen und optischen Eigenschaften beschrieben. Ebenfalls verbessert sind die Siegelbarkeit der Folie und die Durchlässigkeit für Wasserdampf und Sauerstoff. Sämtliche Verbesserungen resultieren aus der Zugabe eines niedrigmolekularen Harzes in die Basisschicht. Der Harzanteil beträgt dabei zwischen 3 und 30 Gew.-%. Das Harz hat ein Molekulargewicht deutlich kleiner als 5 000, bevorzugt kleiner als 1 000, und beträgt beispielsweise 600. Der Erweichungspunkt des Harzes liegt bei 120 bis 140 °C. Aufgrund der angegebenen Streckverhältnisse von 5:1 in Maschinenrichtung und 10:1 in Querrichtung eignet sich die Folie nur bedingt für den Dreheinschlag. Durch das niedrige Molekulargewicht des Harzes sind die Diffusion des Harzes durch die Folie und die Migration in das Lebensmittel sehr hoch.

In der EP-A-0 317 276 wird eine boPP-Folie für die Twistanwendung offenbart, die in der Basisschicht ein Propylenhomopolymeres und ein Kohlenwasserstoffharz enthält. Die Konzentration des Harzes beträgt zwischen 1 und 40 Gew.-%. Aufgrund der gewählten Rezeptur soll sich die Folie durch gute dead fold-Eigenschaften auszeichnen und für die Twistfilmanwendung geeignet sein. Das verwendete Harz ist z. B. ein $C_9$-Terpolymer (Arkon P 125), das ein Molekulargewicht von ca. 1 000 besitzt. Die Nachteile eines solchen Harzes wurden zuvor beschrieben.

US 5,213,744 beschreibt ein Verfahren zur Herstellung ein harzhaltigen Polypropylenfolie, welche als Twist und Verpackungsfolie verwendet wird. Nach der Beschreibung wird ein Kohlenwasserstoffharz unter Einwirkung hoher Scherkräfte mit Polypropylen gemischt, um ein Konzentrat zu bilden, welches 10 bis 90% Harz enthält. Dieses Konzentrat wird anschließend zur Herstellung der Folie eingesetzt.

Die Aufgabe der vorliegenden Erfindung bestand darin, eine harzhaltige Mehrschichtfolie zur Verfügung zu stellen, die ein gutes Twistverhalten für den Dreheinschlag aufweist und nicht zur Anreicherung von Harz im verpackten fetthaltigen Lebensmittel führt. Dabei sollen die anderen Folieneigenschaften, die im Hinblick auf deren Verwendung als Verpackungsfolie gefordert sind, nicht beeinträchtigt werden, d. h. die Folie soll z. B. eine gute Transparenz, einen hohen Glanz und gute Kratzfestigkeit aufweisen.

Erfindungsgemäß wird diese Aufgabe gelöst durch eine Mehrschichtfolie, welche mindestens eine Basisschicht aus Polypropylen und Kohtenwasserstoffharz und mindestens eine Deckschicht umfaßt. Die Deckschicht enthält α-olefinische Polymere mit 2 bis 10 Kohlenstoffatomen. Das Kohlenwasserstoffharz der Basisschicht hat ein mittleres Molekulargewicht von 2 000 bis 8 000 hat und der Anteil an Kohlenwasserstoffharz mit einem Molekulargewicht von unter 1 000 beträgt höchstens 35 Gew.-%. bezogen auf das Gesamtgewicht des Kohlenwasserstoffharzes.

Es wurde bei der Untersuchung von verpackten fetthaltigen Lebensmitteln gefunden, daß Harze mit einem mittleren Molekulargewicht von kleiner 1 500 in das fetthaltige Lebensmittel migrieren und sich dort anreichern. Dieser Effekt ist außerordentlich unerwünscht und schränkt die Anwendung vieler harzhaltiger Folien für Lebensmittelverpackungen sehr ein. Überraschenderweise wird die Migration des Harzes vermieden, wenn solche mit einem mittleren Molekulargewicht von 2000 bis 8000 in der Folie eingesetzt werden.

Die Basisschicht der erfindungsgemäßen Mehrschichtfolie enthält neben dem erfindungsgemäßen Harz im wesentlichen ein Propylenpolymer oder eine Polypropylenmischung. Im allgemeinen enthält die Basisschicht 60 bis 95 Gew.-% vorzugsweise 60 bis 90 Gew.-%. Insbesondere 65 bis 85 Gew.-% Polypropylen bezogen auf das gewicht der Basisschicht.

Das Propylenpolymere der Basisschicht enthält zum überwiegenden Teil (mindestens 90 %, vorzugsweise 95 bis 100 Gew.-%, bezogen auf das Polymere) Propylen und besitzt einen Schmelzpunkt von 140 °C oder höher, vorzugsweise 150 bis 170 °C. Isotaktisches Homopolypropylen mit einem n-heptanlöslichen Anteil von 6 Gew.-% und weniger, bezogen auf das isotaktische Homopolypropylen, stellt ein bevorzugtes Propylenpolymere für die Basisschicht dar. Das Propylenpolymere der Kernschicht hat im allgemeinen einen Schmelzflußindex von 0,5 g/10 min bis 8 g/10 min, vorzugsweise 2 g/10 min bis 5 g/10 min, bei 230 °C und einer Kraft von 21,6 N (DIN 53 735).

Gegebenenfalls kann das in der Basisschicht eingesetzte Propylenpolymere durch den Zusatz von organischen Peroxiden teilabgebaut werden. Ein Maß für den Grad des Abbaus des Polymeren ist der sogenannte Abbaufaktor A, welcher die relative Änderung des Schmelzflußindex nach DIN 53 735 des Polypropylens, bezogen auf das Ausgangspolymere, angibt.

$$A = \frac{MFI_2}{MFI_1}$$

$MFI_1 = $ Schmelzflußindex des Propylenpolymeren vor dem Zusatz des organischen Peroxids
$MFI_2 = $ Schmelzflußindex des peroxidisch abgebauten Propylenpolymeren

Im allgemeinen liegt der Abbaufaktor A des eingesetzten Propylenpolymeren in einem Bereich von 3 bis 15, vorzugsweise 6 bis 10.

Als organische Peroxide sind Dialkylperoxide besonders bevorzugt, wobei unter einem Alkylrest die üblichen gesättigten geradkettigen oder verzweigten niederen Alkylreste mit bis zu sechs Kohlenstoffatomen verstanden werden. Insbesondere sind 2,5-Dimethyl-2,5-di(t-butylperoxy)-hexan oder Di-t-butylperoxid bevorzugt.

Die Basisschicht der Folie enthält erfindungsgemäß ein Kohlenwasserstoffharz mit einem Molekulargewicht von 2000 bis 8000, insbesondere 2 000 bis 6 500, im allgemeinen in einer Menge von 5 bis 40 Gew.-%, vorzugsweise 10 bis 40 Gew.-%, insbesondere 15 bis 35 Gew.-%, bezogen auf das Gewicht der Basisschicht. Die Auswahl eines höhermolekularen Harzes mit einem mittleren Molekulargewicht von mindestens 2000 ist wesentlich für das verbesserte Migrationsverhalten. Es wurde gefunden, daß Bestandteile des Harzes mit einem Molekulargewicht kleiner als 1 000 besonders gut migrieren. Daher ist es erfindungswesentlich, daß das Harz mindestens ein mittleres Molekulargewicht von 2000 aufweist. Es ist besonders vorteilhaft, wenn das eingesetzte Harz nur geringe Anteile mit einem Molekulargewicht von kleiner als 1 000 enthält. Diese Anteile sollten möglichst weniger als 35 Gew.-%, vorzugsweise weniger als 30 Gew.-%, insbesondere weniger als 25 Gew.-%, jeweils bezogen auf das Gewicht des Harzes, betragen.

Die Kohlenwasserstoffharze können teilweise oder vollständig hydriert sein. Als Harze kommen grundsätzlich synthetische Harze oder Harze natürlichen Ursprungs in Frage. Es hat sich als besonders vorteilhaft erwiesen, Harze mit einem Erweichungspunkt von ≥80 °C (gemessen nach DIN 1995-U4 bzw. ASTM E-28) einzusetzen, wobei solche mit einem Erweichungspunkt von 100 bis 180 °C, insbesondere 120 bis 160 °C, bevorzugt sind. Die Einarbeitung des Harzes in die Folie (z. B. Einschnecken- oder Kaskadenextruder) erfolgt vorzugsweise in Form eines Masterbatches, welches in den Extruder zugegeben wird. Üblich sind beispielsweise Masterbatche, in denen 30 bis 70 Gew.-%, vorzugsweise 50 Gew.-%, Propylenhomopolymeres und 70 bis 30 Gew.-%, vorzugsweise 50 Gew.-%, Kohlenwasserstoffharz enthalten sind. Die Angaben in Gew.-% beziehen sich auf das Gesamtgewicht an Propylenpolymer und Kohlenwasserstoffharz.

Als Kohlenwasserstoffharze sind Erdölharze (Petroleumharze), Styrolharze, Cyclopentadienharze und Terpenharze (diese Harze sind in Ullmanns Encyklopädie der techn. Chemie, 4. Auflage, Band 12, Seiten 525 bis 555, beschrieben), bevorzugt.

Die Erdölharze sind solche Kohlenwasserstoffharze, die durch Polymerisation von tiefzersetzten (deep-decomposed) Erdölmaterialien in Gegenwart eines Katalysators hergestellt werden. Diese Erdölmaterialien enthalten gewöhnlich ein Gemisch von harzbildenden Substanzen wie Styrol, Methylstyrol, Vinyltoluol, Inden, Methylinden, Butadien, Isopren, Piperylen und Pentylen. Die Styrolharze sind Homopolymere von Styrol oder Copolymere von Styrolen wie z. B. Methylstyrol mit anderen Monomeren wie Vinyltoluol und Butadien. Die Cyclopentadienharze sind Cyclopentadienhomopolymere oder Cyclopentadiencopolymere, die aus Kohlenteerdestillaten und zerlegtem Erdölgas erhalten werden. Diese Harze werden hergestellt, indem die Materialien, die Cyclopentadien enthalten, während einer langen Zeit bei hoher Temperatur gehalten werden. In Abhängigkeit von der Reaktionstemperatur können Dimere, Trimere oder Oligomere erhalten werden.

Die Terpenharze sind Polymerisate von Terpenen, d. h. Kohlenwasserstoffen der Formel $C_{10}H_{16}$, die in fast allen etherischen Ölen oder ölhaltigen Harzen von Pflanzen enthalten sind, und phenolmodifizierte Terpenharze. Als spezielle Beispiele der Terpene sind Pinen, α-Pinen, Dipenten, Limonen, Myrcen, Camphen und ähnliche Terpene zu nennen. Bei den Kohlenwasserstoffharzen kann es sich auch um die sogenannten modifizierten Kohlenwasserstoffharze handeln. Die Modifizierung erfolgt im allgemeinen durch Reaktion der Rohstoffe vor der Polymerisation, durch Einführung spezieller Monomere oder durch Reaktion des polymerisierten Produkts, wobei insbesondere Hydrierungen oder Teilhydrierungen vorgenommen werden.

Als Kohlenwasserstoffharze werden außerdem Styrolhomopolymerisate, Styrolcopolymerisate, Cyclopentadienhomopolymerisate, Cyclopentadiencopolymerisate und/oder Terpenpolymerisate mit einem Erweichungspunkt von jeweils oberhalb 100 °C eingesetzt (bei den ungesättigten Polymerisaten ist das hydrierte Produkt bevorzugt).

Ganz besonders bevorzugt werden die Cyclopentadienpolymerisate mit einem Erweichungspunkt von 140 °C und darüber in der Basisschicht eingesetzt.

Die erfindungsgemäße Mehrschichtfolie umfaßt mindestens eine Deckschicht aus Polymeren aus α-Olefinen mit 2 bis 10 Kohlenstoffatomen. Im allgemeinen enthält die Deckschicht 60 bis 100 Gew.-%, vorzugsweise 70 bis 98 Gew.-%, insbesondere 80 bis 95 Gew.-%, α-olefinische Polymere.

Im allemeinen enthält die Deckschicht

ein Propylenhomopolymer oder

ein Copolymer von

Ethylen und Propylen oder

Ethylen und Butylen oder

Propylen und Butylen oder

Ethylen und einem anderen α-Olefin mit 5 bis 10 Kohlenstoffatomen oder

Propylen und einem anderen α-Olefin mit 5 bis 10 Kohlenstoffatomen oder

ein Terpolymer von

Ethylen und Propylen und Butylen oder

Ethylen und Propylen und einem anderen α-Olefin mit 5 bis 10 Kohlenstoffatomen oder

eine Mischung aus zwei oder mehreren der genannten Homo-, Co- und Terpolymeren oder

ein Blend aus zwei oder mehreren der genannten Homo-, Co- und Terpolymeren, gegebenenfalls gemischt mit einem oder mehreren der genannten Homo-, Co- und Terpolymeren.

Besonders bevorzugt enthält die Deckschicht im wesentlichen

ein Propylenhomopolymer oder

ein Copolymer von

Ethylen und Propylen oder

Ethylen und Butylen-1 oder

Propylen und Butylen-1 oder

ein Terpolymer von

Ethylen und Propylen und Butylen-1 oder

eine Mischung aus zwei oder mehreren der genannten besonders bevorzugten Homo-, Co- und Terpolymeren oder

ein Blend aus zwei oder mehreren der genannten besonders bevorzugten Homo-, Co- und Terpolymeren, gegebenenfalls gemischt mit einem oder mehreren der genannten Homo-, Co- und Terpolymeren,

wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit

einem Butylengehalt von 4 bis 25 Gew.-%, bevorzugt 10 bis 20 Gew.-%,

jeweils bezogen auf das Gesamtgewicht des Copolymeren, oder

statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 3 bis 20 Gew.-%, bevorzugt 8 bis 10 Gew.-%,

jeweils bezogen auf das Gesamtgewicht des Terpolymeren, oder

ein Blend aus einem Ethylen-Propylen-Butylen-1-Terpolymeren und einem Propylen-Butylen-1 -Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends,

bevorzugt sind.

Das in der Deckschicht eingesetzte Propylenhomopolymere enthält zum überwiegenden Teil (mindestens 90 %) Propylen und besitzt einen Schmelzpunkt von 140 °C oder höher, vorzugsweise 150 bis 170 °C, wobei isotaktisches Homopolypropylen mit einem n-heptanlöslichen Anteil von 6 Gew.-% und weniger, bezogen auf das isotaktische Homopolypropylen, bevorzugt ist. Das Homopolymere der Komponente I bzw. das in dieser enthaltene Homopolymere hat im allgemeinen einen Schmelzflußindex von 0,5 g/10 min bis 15 g/10 min, vorzugsweise 2,0 g/10 min bis 10 g/10 min.

Die in der Deckschicht eingesetzten vorstehend beschriebenen Copolymeren weisen im allgemeinen einen Schmelzflußindex von 2 bis 20 g/10 min, vorzugsweise von 4 bis 15 g/10 min, auf. Der Schmelzpunkt liegt im Bereich von 120 bis 140 °C. Die in der Deckschicht eingesetzten Terpolymeren haben einen Schmelzflußindex im Bereich von 2 bis 20 g/10 min, vorzugsweise von 4 bis 15 g/10 min, und einen Schmelzpunkt im Bereich von 120 bis 140 °C. Das vorstehend beschriebene Blend aus Co- und Terpolymeren hat einen Schmelzflußindex von 5 bis 9 g/10 min und einen Schmelzpunkt von 120 bis 150 °C. Alle vorstehend angegebenen Schmelzflußindices werden bei 230 °C und einer Kraft von 21,6 N (DIN 53 735) gemessen.

Gegebenenfalls können die Deckschichtpolymeren in der gleichen Weise wie vorstehend für die Basisschicht beschrieben peroxidisch abgebaut sein, wobei grundsätzlich die gleichen Peroxide verwendet werden. Der Abbaufaktor für die Deckschichtpolymeren liegt im allgemeinen in einem Bereich von 3 bis 15, vorzugsweise 6 bis 10.

In einer matten Ausführungsform enthält die Deckschicht zusätzlich ein High Density Polyethylen (HDPE), welches mit den vorstehend beschriebenen Deckschichtpolymeren gemischt oder geblendet wird.

Unter HDPE werden Hochdruckpolyethylene verstanden, welche die folgenden Eigenschaften aufweisen:

1. Der Schmelzflußindex MFI, gemessen nach DIN 53 735 oder ISO 1133 bei 50 N/190 °C, liegt im Bereich von 0,2 bis 50 g/10 min, vorzugsweise 1,5 bis 45 g/10 min, insbesondere 5 bis 25 g/10 min.

2. Die Viskositätszahl, gemessen nach DIN 53 728, Teil 4, oder ISO 1191, liegt im Bereich von 100 bis 450 cm$^3$/g, vorzugsweise 120 bis 280 cm$^3$/g.

3. Die Kristallinität beträgt 35 bis 80 %, vorzugsweise 50 bis 80 %.

4. Die Dichte, gemessen bei 23 °C nach DIN 53 479, Verfahren A, oder ISO 1183, liegt im Bereich von 0,93 bis 0,97 g/cm$^3$, vorzugsweise 0,95 bis 0,96 g/cm$^3$.

5. Der Schmelzpunkt, gemessen mit DSC (Maximum der Schmelzkurve, Aufheizgeschwindigkeit 20 °C/min), liegt zwischen 120 und 150 °C, vorzugsweise zwischen 125 und 135 °C).

Die Zusammensetzung und weitere Einzelheiten der matten Deckschichten sind beispielsweise in der deutschen Patentanmeldung Nr. 43 13 430.0 beschrieben, auf die hier ausdrücklich Bezug genommen wird.

Gegebenenfalls können der/den Deckschicht/en in gleicher Weise wie vorstehend für die Basisschicht beschrieben ebenfalls höhermolekulare Harze zugesetzt werden. Dabei sind in gleicher Weise Harze mit einem Mw von mindestens 1 500 zu verwenden. Die Deckschichten enthalten im allgemeinen 5 bis 40 Gew.-%, insbesondere 5 bis 30 Gew.-%, vorzugsweise 5 bis 20 Gew.-%, Harz. Ausführungsformen mit harzhaltigen Deckschichten sind besonders vorteilhaft bezüglich ihrer Optik wie Glanz und Transparenz. Im allgemeinen sollten die harzhaltigen Deckschichten zusätzlich Antiblockmittel und/oder Gleitmittel enthalten, um eine gute Maschinengängigkeit durch Verringerung der Klebeneigungen zu gewährleisten.

Die erfindungsgemäße Mehrschichtfolie umfaßt zumindest die vorstehend beschriebene harzhaltige Basisschicht und mindestens eine Deckschicht. Je nach ihrem vorgesehenen Verwendungszweck kann die Mehrschichtfolie eine weitere Deckschicht auf der gegenüberliegenden Seite aufweisen. Gegebenenfalls kann/können auch eine oder mehrere Zwischenschicht/en zwischen der Basisund der/den Deckschicht/en aufgebracht werden.

Bevorzugte Ausführungsformen der Mehrschichtfolie sind dreischichtig. Aufbau, Dicke und Zusammensetzung einer zweiten Deckschicht können unabhängig von der bereits vorhandenen Deckschicht gewählt werden, wobei die zweite Deckschicht ebenfalls eine der vorstehend beschriebenen Polymeren oder Polymermischungen enthalten kann, welche aber nicht mit der der ersten Deckschicht identisch sein muß. Die zweite Deckschicht kann jedoch auch andere gängige Deckschichtpolymere enthalten.

Die Dicke der Deckschicht/en ist größer als 0,2 μm und liegt vorzugsweise im Bereich von 0,3 bis 5 μm, insbesondere 0,4 bis 3 μm, wobei beidseitige Deckschichten gleich oder verschieden dick sein können.

Die Gesamtdicke der erfindungsgemäßen Polyolefin-Mehrschichtfolie kann innerhalb weiter Grenzen variieren und richtet sich nach dem beabsichtigten Einsatz. Sie beträgt vorzugsweise 5 bis 100 μm, insbesondere 10 bis 60 μm, wobei die Basisschicht etwa 50 bis 96 % der Gesamtfoliendicke ausmacht.

Die Dichte der Folie liegt im allgemeinen bei 0,9 g/cm$^2$ oder darüber, vorzugsweise im Bereich von 0,9 bis 0,97 g/cm$^2$.

Zur Verbesserung der Hafteigenschaften der Deckschicht/en kann mindestens eine Oberfläche der Folie corona- oder flammbehandelt werden, wobei gegebenenfalls die entsprechende Behandlung an beiden Oberflächen vorgenommen werden und gleich oder verschieden sein kann.

Um bestimmte Eigenschaften der erfindungsgemäßen Polyolefinfolie noch weiter zu verbessern, können sowohl die Basisschicht als auch die Deckschicht/en weitere Zusätze in einer jeweils wirksamen Menge enthalten, vorzugsweise Antistatika und/oder Antiblockmittel und/oder Gleitmittel und/oder Stabilisatoren und/oder Neutralisationsmittel, die mit den Propylenpolymeren der Basisschicht und der Deckschicht/en verträglich sind, mit Ausnahme der Antiblockmittel, die im allgemeinen unverträglich sind. Alle Mengenangaben in der folgenden Ausführung in Gewichtsprozent (Gew.-%) beziehen sich jeweils auf die Schicht oder Schichten, der oder denen das Additiv zugesetzt sein kann.

Bevorzugte Antistatika sind Alkali-alkansulfonate, polyethermodifizierte, d. h. ethoxylierte und/oder propoxylierte Polydiorganosiloxane (Polydialkylsiloxane, Polyalkylphenylsiloxane und dergleichen) und/oder die im wesentlichen geradkettigen und gesättigten aliphatischen, tertiären Amine mit einem aliphatischen Rest mit 10 bis 20 Kohlenstoffatomen, die mit ω-Hydroxy-(C$_1$-C$_4$)-alkyl-Gruppen substituiert sind, wobei N,N-bis-(2-hydroxethyl)-alkylamine mit 10 bis 20 Kohlenstoffatomen, vorzugsweise 12 bis 18 Kohlenstoffatomen, im Alkylrest besonders geeignet sind. Die wirksame Menge an Antistatikum liegt im Bereich von 0,05 bis 0,5 Gew.-%. Des weiteren wird Glycerinmonostearat in einer Menge von 0,03 % bis 0,5 % bevorzugt als Antistatikum eingesetzt.

Geeignete Antiblockmittel sind anorganische Zusatzstoffe wie Siliciumdioxid, Calciumcarbonat, Magnesiumsilicat, Aluminiumsilicat, Calciumphosphat und dergleichen und/oder unverträgliche organische Polymerisate wie Polyamide, Polyester, Polycarbonate und dergleichen, bevorzugt werden Benzoguanaminformaldehyd-Polymere, Siliciumdioxid und Calciumcarbonat. Die wirksame Menge an Antiblockmittel liegt im Bereich von 0,1 bis 2 Gew.-%, vorzugsweise 0,1 bis 0,8 Gew.-%. Die mittlere Teilchengröße liegt zwischen 1 und 6 $\mu$m, insbesondere 2 und 5 $\mu$m, wobei Teilchen mit einer kugelförmigen Gestalt, wie in der EP-A-0 236 945 und der DE-A-38 01 535 beschrieben, besonders geeignet sind. Bevorzugt werden die Antiblockmittel den Deckschichten zugesetzt.

Gleitmittel sind höhere aliphatische Säureamide, höhere aliphatische Säureester, Wachse und Metallseifen sowie Polydimethylsiloxane. Die wirksame Menge an Gleitmittel liegt im Bereich von 0,01 bis 3 Gew.-%, vorzugsweise 0,02 bis 1 Gew.-%. Besonders geeignet ist der Zusatz von höheren aliphatischen Säureamiden im Bereich von 0,01 bis 0,25 Gew.-% in der Basisschicht und/oder den Deckschichten. Ein insbesondere geeignetes aliphatisches Säureamid ist Erucasäureamid.

Der Zusatz von Polydimethylsiloxanen ist im Bereich von 0,02 bis 2,0 Gew.-% bevorzugt, insbesondere Polydimethylsiloxane mit einer Viskosität von 10 000 bis 1 000 000 mm$^2$/s. Besonders günstig ist der Zusatz der Polydimethylsiloxane in eine oder beide Deckschichten.

Als Stabilisatoren können die üblichen stabilisierend wirkenden Verbindungen für Ethylen-, Propylen- und andere $\alpha$-Olefinpolymere eingesetzt werden. Deren Zusatzmenge liegt zwischen 0,05 und 2 Gew.-%. Besonders geeignet sind phenolische Stabilisatoren, Alkali-/Erdalkalistearate und/oder Alkali-/Erdalkalicarbonate.

Phenolische Stabilisatoren werden in einer Menge von 0,1 bis 0,6 Gew.-%, insbesondere 0,15 bis 0,3 Gew.-%, und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertiärbutyl-4-Hydroxybenzyl)benzol sind besonders vorteilhaft.

Neutralisationsmittel sind vorzugsweise Calciumstearat und/oder Calciumcarbonat einer mittleren Teilchengröße von höchstens 0,7 $\mu$m, einer absoluten Teilchengröße von kleiner 10 $\mu$m und einer spezifischen Oberfläche von mindestens 40 m$^2$/g.

Die Erfindung betrifft weiterhin ein Verfahren zur Herstellung der erfindungsgemäßen Mehrschichtfolie nach dem an sich bekannten Coextrusionsverfahren. Im Rahmen dieses Verfahrens wird so vorgegangen, daß die den einzelnen Schichten der Folie entsprechenden Schmelzen durch eine Flachdüse coextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Coronabehandlung vorgesehenen Oberflächenschicht coronabehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird wie beim Coextrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man zweckmäßigerweise mit Hilfe zweier entsprechend dem angestrebten Streckverhältnis verschieden schnellaufender Walzen durchführen und das Querstrecken mit Hilfe eines entsprechenden Kluppenrahmens. Für die Dreheinschlagsfolie werden die Bedingungen in der Längs- und in der Querrichtung so gewählt, daß die Folie in Längs- und Querrichtung in etwa balanced orientiert ist und weitgehend isotrope mechanische Eigenschaften hat. Beispielsweise beträgt das Verhältnis der bleibenden Dehnung oder der Reißfestigkeit in Querrichtung zur bleibenden Dehnung oder Reißfestigkeit in Längsrichtung maximal 2,0. Die Voraussetzungen für die Erzielung von sehr guten Twisteigenschaften sind dann besonders günstig. Weiterhin hat sich gezeigt, daß die Drehfähigkeit um so besser wird, je höher die Folie längsverstreckt ist. Die erfindungsgemäßen Längsstreckungsverhältnisse sind 5,0 bis 9, vorzugsweise 5,5 bis 8,0. Dementsprechend sind auch die Querstreckverhältnisse zu wählen. Vorzugsweise ergibt sich hier ein Bereich von 5,0 bis 9,0. Zweckmäßigerweise wird die Folie nicht - wie dies bei anderen Verpackungsfolien der Fall ist - hochquerverstreckt. Die Anwendungen von einem Längsstreckverhältnis von $\lambda$ = 4,5 und einem Querstreckverhältnis von $\lambda$ = 10 ergibt - auch bei der Zugabe von hohen Harzmengen - eine Folie mit vergleichsweise schlechter Twistfähigkeit. Zur Erzielung der erfindungswesentlichen Twisteigenschaften ist ein Verhältnis der Streckverhältnisse von quer/längs von kleiner 2, vorzugsweise kleiner 1,5, einzuhalten. Besonders bevorzugt liegt dieses Verhältnis im Bereich von 0,5 bis 1,5.

Die Querstreckung wird im allgemeinen so ausgeführt, daß die Folie im Querstreckrahmen zunächst auf eine

maximale Breite $B_{max}$ gestreckt wird. Vor dem anschließenden Thermofixieren läuft der Querstreckrahmen wieder leicht zusammen, so daß die Endfolienbreite kleiner als die Maximalbreite $B_{max}$ des Querstreckrahmens ist. Der Grad des Zusammenlaufens des Querstreckrahmens wird als Konvergenz angegeben, die aus der maximalen Breite des Querstreckrahmens $B_{max}$ und der Endfolienbreite $B_{Folie}$ nach der folgenden Formel berechnet wird:

$$\text{Konvergenz} = \frac{B_{max} - B_{Folie}}{B_{max}}$$

Das Querstreckverhältnis $\lambda$ ist ein Effektivwert, der aus der Endfolienbreite $B_{Folie}$, der Breite des unverstreckten Randbereichs der Folie $B_{Rand}$ und der Breite der längsgestreckten Folie $B_{längs}$ nach der folgenden Formel berechnet wird:

$$\lambda = \frac{B_{Folie} - 2 \cdot B_{Rand}}{B_{längs} - 2 \cdot B_{Rand}}$$

An die biaxiale Streckung der Folie schließt sich ihre Thermofixierung (Wärmebehandlung) an, wobei die Folie etwa 0,1 bis 10 s lang bei einer Temperatur von 100 bis 160 °C gehalten wird. Anschließend wird die Folie in üblicher Weise mit einer Aufwickeleinrichtung aufgewickelt.

Es hat sich als besonders günstig erwiesen, die Abzugswalze oder -walzen, durch die die ausgepreßte Folie abgekühlt und verfestigt wird, durch einen Heizund Kühlkreislauf bei einer Temperatur von 10 bis 100 °C, vorzugsweise 20 bis 70 °C, zu halten.

Die Temperaturen, bei denen Längs- und Querstreckung durchgeführt werden, können in einem relativ großen Bereich variieren und richten sich nach der jeweiligen Zusammensetzung der Basis- und der Deckschichtmischung und nach den gewünschten Eigenschaften der Folie. Im allgemeinen wird die Längsstrekkung vorzugsweise bei 80 bis 150 °C und die Querstreckung vorzugsweise bei 120 bis 170 °C durchgeführt.

Gegebenenfalls kann/können wie oben erwähnt nach der biaxialen Streckung eine oder beide Oberfläche/n der Folie nach einer der bekannten Methoden corona- oder flammbehandelt werden. Die Behandlungsintensität liegt im allgemeinen im Bereich von 37 bis 50 mN/m, vorzugsweise 39 bis 40 mN/m.

Bei der Coronabehandlung wird zweckmäßigerweise so vorgegangen, daß die Folie zwischen zwei als Elektroden dienenden Leiterelementen hindurchgeführt wird, wobei zwischen den Elektroden eine so hohe Spannung, meist Wechselspannung (etwa 5 bis 20 kV und 5 bis 30 kHz), angelegt ist, daß Sprüh- oder Coronaentladungen stattfinden können. Durch die Sprüh- oder Coronaentladung wird die Luft oberhalb der Folienoberfläche ionisiert und reagiert mit den Molekülen der Folienoberfläche, so daß polare Einlagerungen in der im wesentlichen unpolaren Polymermatrix entstehen.

Für eine Flammbehandlung mit polarisierter Flamme (vgl. US-A-4,622,237) wird eine elektrische Gleichspannung zwischen einem Brenner (negativer Pol) und einer Kühlwalze angelegt. Die Höhe der angelegten Spannung beträgt zwischen 400 und 3 000 V, vorzugsweise liegt sie im Bereich von 500 bis 2 000 V. Durch die angelegte Spannung erhalten die ionisierten Atome eine erhöhte Beschleunigung und treffen mit größerer kinetischer Energie auf die Polymeroberfläche. Die chemischen Bindungen innerhalb des Polymermoleküls werden leichter aufgebrochen, und die Radikalbildung geht schneller vonstatten. Die thermische Belastung des Polymeren ist hierbei weitaus geringer als bei der Standardflammbehandlung, und es können Folien erhalten werden, bei denen die Siegeleigenschaften der behandelten Seite sogar besser sind als diejenigen der nicht behandelten Seite.

Es wurde gefunden, daß die Einarbeitung von Harz mit einem Molekulargewicht von mindestens 2000 in die Basisschicht der Folie vorteilhafte Auswirkungen hat. Das Harz trägt in der gewünschten Weise zur Verbesserung der Twisteigenschaften bei, aber weist gleichzeitig sehr niedrige Migrationswerte auf. Damit wird erstmals eine Folie zur Verfügung gestellt, welche für den Dreheinschlag schokoladenhaltiger Bonbons verwendet werden kann. Alle bisher bekannten Folien konnten wegen der Migration des Harzes in das Lebensmittel nicht eingesetzt werden. Es wurde weiterhin gefunden, daß neben dem mittleren Molekulargewicht des Harzes von mindestens 2000 auch dessen Molekulargewichtsverteilung im Bereich von Molekulargewichten unterhalb 1 000 zusätzlich eine Rolle bei der Migration spielt. Während der Stand der Technik überwiegend den Einsatz gerade solcher niedermolekularer Harze lehrt oder das Molekulargewicht bzw. die Molekulargewichtsverteilung für unkritisch hält, wurde nun gefunden, daß gerade diese niedermolekularen Bestandteile stark migrieren. Daher ist es besonders günstig, wenn man neben einem Mindestwert für das mittlere Molekulargewicht (2 000) noch zusätzlich darauf achtet, daß die Bestandteile des Harzes im Bereich von unter 1 000 möglichst gering sind.

Überraschenderweise werden auch mit diesen höhermolekularen Harzen die gewünschten mechanischen Folieneigenschaften erzielt.

Die in etwa balanced orientierten Ausführungsformen der Folie zeichnen sich durch hervorragende Twisteigenschaften aus. Die Twistfähigkeit der Folie kann sehr gut durch zwei physikalische Größen der Folie beschrieben werden. Die Twistfähigkeit ist umso besser, je größer die bleibende Dehnung (in Längs- und Querrichtung; Meßmethode siehe nachstehend) und je kleiner die Reißdehnung in Längsrichtung ist. Die Werte der obigen physikalischen Größen sollten in beiden Richtungen etwa gleich groß sein. Das Verhältnis der Werte für die bleibende Dehnung $D_{bQ}$:$D_{bL}$ liegt im allgemeinen unter 2,0. Vorzugsweise liegt das Verhältnis $D_{bQ}$:$D_{bL}$ im Bereich von 0,5 bis 1,5, insbesondere im Bereich von 0,7 bis 1,3. Entsprechende Verhältnisse bilden auch die Werte für Reißdehnung quer und längs.

Eine gute Twistfähigkeit ist gegeben, wenn die bleibenden Dehnwerte für beide Richtungen über 50 %, vorzugsweise im Bereich von 50 bis 90 %, liegen.

Die Reißdehnung wird nach DIN 53 455 bestimmt. Die erfindungsgemäßen Folien haben Reißdehnwerte in beiden Richtungen von kleiner 160 %, vorzugsweise kleiner 130 %.

Zusammenfassend ist festzustellen, daß sich die erfindungsgemäße Mehrschichtfolie durch eine Kombination von Eigenschaften auszeichnet, welche bisher an einer Folie nicht gemeinsam realisiert werden konnten:

- sehr gute Twisteigenschaften,
- sehr gutes Migrationsverhalten, insbesondere niedrige Migration in fetthaltigen Lebensmitteln,
- keine Harzablagerungen auf den Walzen,
- kein Verblocken von Folienverpackungen gegeneinander und
- sehr gute Kratzfestigkeit.

Durch diese Kombination von Eigenschaften wird erstmals eine Folie zur Verfügung gestellt, welche für den vorgesehenen Verwendungszweck als Dreheinschlagsfolie z. B. für schokoladenhaltige Bonbons wirklich kommerziell verwendet werden kann.

Zur Charakterisierung der Rohstoffe und der Folien wurden die folgenden Meßmethoden benutzt:

Schmelzflußindex

Der Schmelzflußindex wurde in Anlehnung an DIN 53 735 bei 21,6 N Belastung und 230 °C bzw. bei 50 N Belastung und 190 °C gemessen.

Schmelzpunkt

DSC-Messung, Maximum der Schmelzkurve, Aufheizgeschwindigkeit 20 °C/min.

Viskositätszahl J

Die Viskositätszahl ist ein Maß für die Molmasse. Die Viskositätszahl wird nach DIN 53 728, Teil 4, in 0,1%iger Dekahydronaphthalin-Lösung bei 135 °C gemessen.

Dichte $\rho$

Die Dichte wird nach DIN 53 479, Verfahren A, bestimmt.

Kristallisationsgrad $\alpha$

Der Kristallisationsgrad läßt sich durch folgende Beziehung ermitteln:

$$\alpha = \frac{\rho - \rho_{amorph}}{\rho_{kristallin} - \rho_{amorph}} \cdot 100\ \%$$

mit

$\rho_{morph} =$     0,8549 g/cm$^3$
$\rho_{kristallin} =$     1,0005 g/cm$^3$
$p =$     Dichte des eingesetzten HDPE-Typs

Trübung

Die Trübung der Folie wurde in Anlehnung an ASTM-D 1003-52 gemessen.

Glanz

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 60° oder 85° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

Rauhigkeit

Die Rauhigkeit wurde in Anlehnung an DIN 4768 bestimmt.

Reibung

Die Reibung wurde in Anlehnung an DIN 53 375 bestimmt.

Oberflächenspannung

Die Oberflächenspannung wurde mittels der sogenannten Tintenmethode (DIN 53 364) bestimmt.

Bedruckbarkeit

Die coronabehandelten Folien wurden 14 Tage nach ihrer Produktion (Kurzzeitbeurteilung) bzw. 6 Monate nach ihrer Produktion (Langzeitbeurteilung) bedruckt. Die Farbhaftung wurde mittels Klebebandtest beurteilt. Konnte mittels Klebeband wenig Farbe abgelöst werden, so wurde die Farbhaftung mit mäßig und bei deutlicher Farbablösung mit schlecht beurteilt.

Bestimmung der bleibenden Dehnung

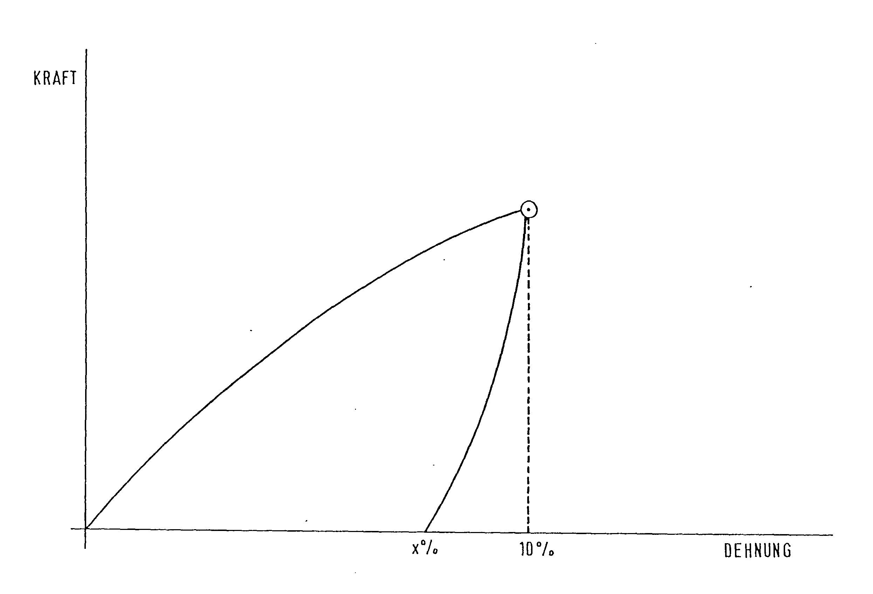

Aus der Folie wurde ein 15 mm breiter Folienstreifen quer zur Maschinenrichtung geschnitten und in eine Zugprüfmaschine eingespannt, wobei die Einspannlänge 200 mm betrug. Die Probe wurde dann mit 20 mm/min entsprechend 10 %/min gedehnt. Nach einer Dehnung von 10 %, d. h. bei einer Probenlänge von 220 mm, wurde die Probe automatisch mit gleicher Geschwindigkeit entspannt. Die Bestimmung der bleibenden Dehnung aus dem Kraft-Dehnungs-Diagramm ist in der beigefügten Figur 4 schematisch dargestellt. Die bleibende Dehnung berechnet sich dabei gemäß

$$D_b = \frac{X\ \%}{10\ \%} \cdot 100\ \%$$

Molekulargewichtsbestimmung

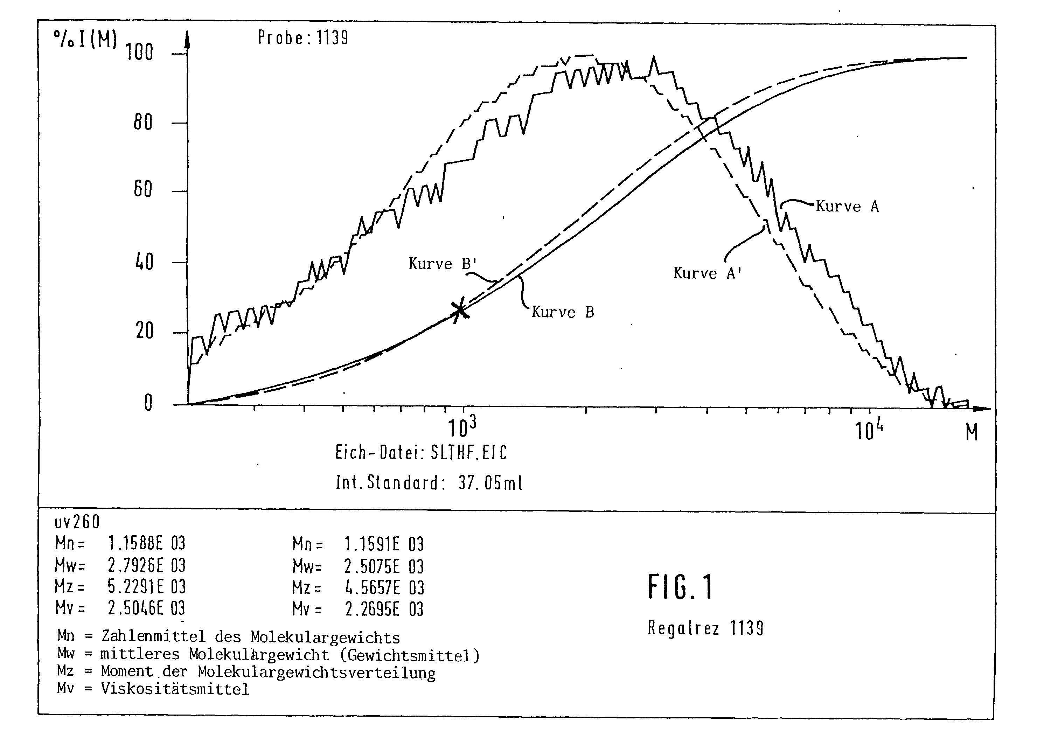

Zur Bestimmung des mittleren Molekulargewichts Mw wird die Drei-Detektor-Gelpermeationschromatographie verwendet. Die Substanz wird in einem Laufmittel wie THF aufgelöst und über eine Trennsäule gegeben. Die Trennsäule ist 90 cm lang und mit einem porösen Trägermaterial gefüllt, dessen Porengröße 5 μm beträgt. Die Detektion erfolgt mittels UV-Absorptionsspektroskopie bei verschiedenen Wellenlängen sowie mittels Brechungsindex und Lichtstreuvermögen der Fraktionen. Die Eichung wird über eine Standardverbindung mit bekanntem Molekulargewicht durchgeführt. Der Vergleich der UV-Absorption der Standardsubstanz mit der Absorption der Probe ermöglicht die Zuordnung der Molekulargewichte. In einer graphischen Darstellung werden die prozentualen Mengenanteile der einzelnen molekular einheitlich gedachten Fraktionen gegen deren Molekulargewicht aufgetragen (siehe beispielsweise Figuren 1 bis 3). Diese Darstellung ist die sogenannte Verteilungskurve (Kurve A). Zusätzlich zeigt die Summenkurve (Kurve B) den prozentualen Anteil der Fraktionen bis zu einem bestimmten Molekulargewicht. Beispielsweise zeigt Punkt X der Summenkurve in Figur 1, daß ein Harzanteil von 25 Gew.-% ein Molekulargewicht von unter 1 000 hat. Das mittlere Molekulargewicht Mw wird aus dem Maximum der Verteilungskurve als Abszissenwert bestimmt.

Migrationsverhalten

Zur Prüfung des Migrationsverhaltens werden kreisförmige Folienmuster mit der zu prüfenden Seite einseitig in Kontakt mit dem $^{14}$C-markierten Prüffett HB 307 gebracht. Dabei werden auf eine Fläche von 0,62 dm$^2$ 120 ml Fett aufgebracht. Die Proben werden 10 Tage lang bei 40 °C in Migrationszellen aufbewahrt. Die Bestimmung der Migrationswerte erfolgt nach den Angaben des Bundesgesundheitsblattes 18,27 (1975) nach K. Figge.

Kratzfestigkeit bzw. Kratzempfindlichkeit

Die Kratzfestigkeit wird in Anlehnung an DIN 53 754 bestimmt. Für die Bestimmung der Kratzfestigkeit wird das Abriebmeßgerät Taber Modell 503 Abraser der Firma Teledyne Taber benutzt, wobei Reibräder der Marke Calibrade R H18, die mit 250 g belastet werden, eingesetzt werden. Unter Kratzfestigkeit bzw. Kratzempfindlichkeit versteht man die Trübungszunahme der verkratzten Folie im Vergleich zur Originalfolie nach 50 Umdrehungen des Probentellers. Die Kratzfestigkeit wird mit sehr gut (+ +) bezeichnet, wenn die Trübungszunahme kleiner 22 % beträgt, mit gut (+), wenn die Trübungszunahme bei 22 bis 25 % liegt, mit mäßig (±), wenn die Trübungszunahme bei 25 bis 30 % liegt, und mit schlecht (-) bei Trübungszunahmen von größer 30 %.

**Beispiel 1**

Es wurde durch Coextrusion und anschließende stufenweise Orientierung in Längs- und in Querrichtung eine symmetrische dreischichtige Folie mit einer Gesamtdicke von 21 μm hergestellt. Die Deckschichten hatten eine Dicke von jeweils 0,4 μm.

A-Basisschicht:

| 71,7 Gew.-% | isotaktisches Polypropylen |
|---|---|
| 28 Gew.-% | Kohlenwasserstoffharz [®Regalrez 1139 von Hercules Inc. (Copolymer aus α-Methylstyrol und Vinyltoluol)] mit einer Erweichungstemperatur von 140 °C und einem Molekulargewicht von 2 500 |
| 0,2 Gew.-% | N,N-bis-ethoxyalkylamin und |
| 0,1 Gew.% | Erucasäureamid |

Der Schmelzflußindex der Mischung betrug
$I_{21,6}$ = 10 g/10 min bzw.
$I_{50,0}$ = 50 g/10 min

B-Deckschichten:

| 99,2 Gew.-% | statistisches Ethylen-Propylen-Copolymeres mit einem $C_2$-Gehalt von 4,5 Gew.-% |
|---|---|
| 0,3 Gew.-% | $SiO_2$ als Antiblockmittel mit einer mittleren Teilchengröße von 3 μm |
| 0,5 Gew.-% | Polydimethylsiloxan mit einer Viskosität von 30 000 mm$^2$/s |

Der Schmelzflußindex der Deckschicht betrug
$I_{21,6}$ = 12 g/10 min bzw.
$I_{50,0}$ = 60 g/10 min

Die Herstellungsbedingungen in den einzelnen Verfahrensschritten waren:

| Extrusion | Temperaturen | A-Schicht: | 190 °C |
|---|---|---|---|
| | | B-Schichte: | 270 °C |
| | Temperatur der Abzugswalze: | | 30 °C |

(fortgesetzt)

| Längsstreckung | Temperatur T = 110°C<br>Längsstreckverhältnis = 6,0 |
|---|---|
| Querstreckung | Temperatur T = 150°C<br>Querstreckverhältnis = 7,3<br>Konvergenz 25 % |
| Fixierung | Temperatur T = 110°C |

Das eingesetzte Kohlenwasserstoffharz hatte die in Figur 1 dargestellte Molekulargewichtsverteilung. Der Anteil an Harz mit einem Molekulargewicht von unter 1 000 betrug ca. 28 %.

Die auf diese Weise hergestellte Folie hatte die in der Tabelle aufgelisteten Eigenschaften (erste Zeile: Beispiel 1). Die Folie wurde vor der Aufrollung einer Coronabehandlung unterzogen, um eine Bedruckbarkeit zu gewährleisten. Die Oberflächenspannung der Folie infolge dieser Behandlung betrug 42 mN/m.

Beispiel 2

Wie in Beispiel 1 wurde eine dreischichtige Folie mit einer Gesamtdicke von 21 μm und mit Deckschichtdicken von jeweils 0,4 μm hergestellt. Im Gegensatz zu Beispiel 1 betrug jetzt der Harzgehalt 20 Gew.-% in der Basisschicht. Das Harz war das gleiche geblieben. Die Extrusionstemperaturen wurden gleichgehalten. Bedingt durch den geringeren Harzgehalt wurden die Bedingungen in der Längs- und Querstreckung wie folgt geändert.

| Längsstreckung | Temperatur T = 115 °C<br>Längsstreckverhältnis = 7,2 |
|---|---|
| Querstreckung | Temperatur T = 152 °C<br>Querstreckverhältnis = 7,2 Konvergenz 20 % |
| Fixierung | Temperatur T = 110 °C |

Die Folieneigenschaften sind in der Tabelle - zweite Zeile (Beispiel 2) - aufgelistet.

Beispiel 3

Verglichen mit den vorherigen Beispielen (1 und 2) wurde der Harzgehalt auf 15 % abgesenkt. Die Bedingungen in den Streckaggregaten waren wie folgt:

| Längsstreckung | Temperatur T = 120 °C<br>Längsstreckverhältnis = 7,7 |
|---|---|
| Querstreckung | Temperatur T = 153 °C<br>Querstreckverhältnis = 7,2 Konvergenz 20 % |
| Fixierung | Temperatur T = 110 °C |

Beispiel 4

Im Vergleich zu Beispiel 1 wurde nur die Zusammensetzung der Deckschicht geändert. Diese enthielt jetzt Polypropylen mit 15 Gew.-% des Harzes aus Beispiel 1 (bezogen auf das Gesamtgewicht der Deckschicht). Wie die Tabelle zeigt, wurde dadurch die bleibende Dehnung leicht verbessert, vor allem aber verbesserte sich die Optik der Folie. Die Verfahrensbedingungen waren wie in Beispiel 1.

Beispiel 5

Im Vergleich zu Beispiel 1 wurde jetzt ein Kohlenwasserstoffharz mit einem Molekulargewicht von 2 100 [®Regalrez 1128 (Copolymer aus α-Methylstyrol und Vinyltoluol)] verwendet. Die Bedingungen bezüglich Zusammensetzung und Verfahren waren wie in Beispiel 1.

Vergleichsbeispiel 1

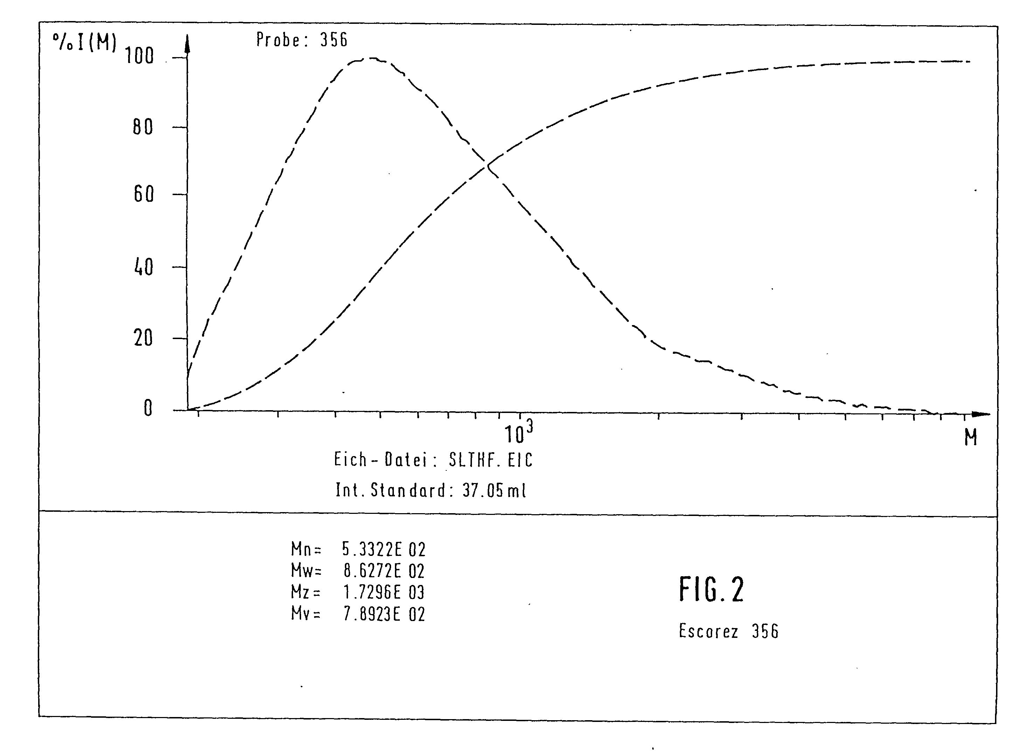

Im Vergleich zu Beispiel 1 wurde jetzt ein Kohlenwasserstoffharz (Cyclopentadienharz) mit einem Molekulargewicht von ca. 860 verwendet (®Escorez ECR 356). Die Verfahrensbedingungen waren wie in Beispiel 1. Die Walzenablagerungen waren stark, das eingepackte Bonbon neigte zum Verblocken, und insbesondere das Migrationsverhalten gegenüber Fett war schlecht.
Das Harz hatte die in Figur 2 dargestellte Molekulargewichtsverteilung. Der Harzanteil mit einem Molekulargewicht von unter 1 000 betrug ca. 70 %.

Vergleichsbeispiel 2

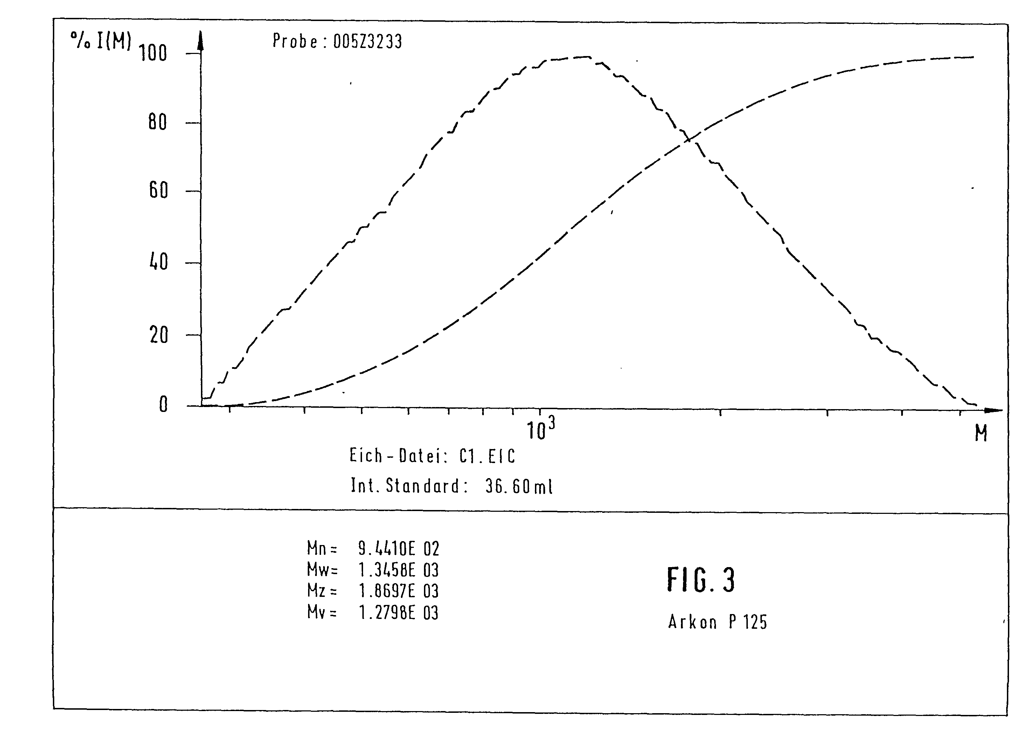

Gegenüber Vergleichsbeispiel 1 wurde jetzt ein Kohlenwasserstoffharz (Styrolharz) mit einem Molekulargewicht von 1 000 verwendet (®Arkon P125). Die Verfahrensbedingungen waren wie im Vergleichsbeispiel 1 beschrieben. Auch hier waren die Eigenschaften deutlich schlechter als die bei der erfindungsgemäßen Folie.
Das Harz hatte die in Figur 3 dargestellte Molekulargewichtsverteilung. Der Harzanteil mit einem Molekulargewicht von unter 1 000 betrug 40 %.

# TABELLE

| | bleibende Dehnung % | | E-Modul N/mm² längs/quer | Reißdehnung % längs/quer | Glanz | Trübung % | Kratzfestigkeit ΔTrübung | Ablagerung auf Walzen | Verblocken beim Weiterverarbeiten | Migration in Fett |
|---|---|---|---|---|---|---|---|---|---|---|
| | längs | quer | | | | | | | | |
| B1 | 61 | 62 | 3 200/3 300 | 120/80 | 105 | 2,3 | 22 | + + | + + | + + |
| B2 | 60 | 61 | 3 100/3 300 | 105/85 | 105 | 2,2 | 24 | + + + | + + + | + + + |
| B3 | 61 | 60 | 3 200/3 400 | 95/88 | 108 | 2,1 | 22 | + + + + | + + + + | + + + + |
| B4 | 63 | 65 | 3 300/3 500 | 110/85 | 130 | 1,7 | 15 | + | + | + + |
| B5 | 62 | 63 | 3 300/3 400 | 118/85 | 103 | 2,2 | 23 | + | + | + |
| VB1 | 64 | 62 | 3 250/3 400 | 115/90 | 105 | 2,1 | 23 | -- | -- | -- |
| VB2 | 62 | 63 | 3 300/3 500 | 118/87 | 102 | 2,2 | 24 | -- | -- | - |

B = Beispiel; VB = Vergleichsbeispiel

+ = keine Ablagerungen, kein Verblocken, geringe Migration in Fett

- = Ablagerungen, Verblocken, Migration

**Patentansprüche**

1. Polypropylen-Mehrschichtfolie, welche mindestens eine Basisschicht, enthaltend Polypropylen und Kohlenwasserstoffharz, und mindestens eine Deckschicht umfaßt, welche α-olefinische Polymere mit 2 bis 10 Kohlenstoffatomen enthält, **dadurch gekennzeichnet, daß** das Kohlenwasserstoffharz ein mittleres Molekulargewicht von 2000 bis 8000 hat und der Anteil an Kohlenwasserstoffharz mit einem Molekulargewicht von unter 1000 höchstens 35 Gew.-%, bezogen auf das Gesamtgewicht des Kohlenwasserstoffharzes, beträgt.

2. Polypropylen-Mehrschichtfolie gemäß Anspruch 1, **dadurch gekennzeichnet, daß** das Kohlenwasserstoffharz einen Erweichungspunkt von 80 bis 180°C, vorzugsweise 100 bis 160°C, hat.

3. Polypropylen-Mehrschichtfolie gemäß Anspruch 1 Oder 2, **dadurch gekennzeichnet, daß** das Kohlenwasserstoffharz der Basisschicht in einer Menge von 5 bis 40 Gew .-%, vorzugsweise 10 bis 35 Gew.-%,jeweils bezogen auf das Gewicht der Basisschicht, zugesetzt ist.

4. Polypropylen-Mehrschichtfolie gemäß einem oder mehreren der Ansprüche 1 bis 3, **dadurch gekennzeichnet, daß** die Mehrschichtfolie in Längs- und Querrichtung einen bleibenden Dehnwert von über 50 %, vorzugsweise im Bereich von 50 bis 90 %, hat.

5. Polypropylen-Mehrschichtfolie gemäß einem oder mehreren der Ansprüche 1 bis 4, **dadurch gekennzeichnet, daß** die Mehrschichtfolie in etwa isotrope mechanische Eigenschaften hat.

6. Polypropylen-Mehrschichtfolie gemäß einem oder mehreren der Ansprüche 1 bis 5, **dadurch gekennzeichnet, daß** das Polypropylenpolymere der Basisschicht einen Schmelzpunkt von mindestens 140 °C besitzt und der Schmelzflußindex im Bereich von 0,5 bis 8 g/10 min liegt.

7. Polypropylen-Mehrschichtfolie gemäß einem oder mehreren der Ansprüche 1 bis 6, **dadurch gekennzeichnet, daß** die Deckschicht
    ein Propylenhomopolymeres oder
    ein Copolymeres von
        Ethylen und Propylen oder
        Ethylen und Butylen oder
        Propylen und Butylen oder
        Ethylen und einem anderen α-Olefin mit 5 bis 10 Kohlenstoffatomen oder
        Propylen und einem anderen α-Olefin mit 5 bis 10 Kohlenstoffatomen oder
    ein Terpolymeres von
        Ethylen und Propylen und Butylen oder
        Ethylen und Propylen und einem anderen α-Olefin mit 5 bis 10 Kohlenstoffatomen oder
    eine Mischung aus zwei oder mehreren der genannten Homo-, Co- und Terpolymeren oder
    ein Blend aus zwei oder mehreren der genannten Homo-, Co- und Terpolymeren, gegebenenfalls gemischt mit einem oder mehreren der genannten Homo-, Co- und Terpolymeren,
enthält.

8. Polypropylen-Mehrschichtfolie gemäß einem oder mehreren der Ansprüche 1 bis 7, **dadurch gekennzeichnet, daß**
die Deckschicht im wesentlichen
    ein Propylenhomopolymer oder
    ein Copolymer von
        Ethylen und Propylen oder
        Ethylen und Butylen-1 oder
        Propylen und Butylen-1 oder
    ein Terpolymer von
        Ethylen und Propylen und Butylen-1 oder
    eine Mischung aus zwei oder mehreren der genannten besonders bevorzugten Homo-, Co- Terpolymeren oder
    ein Blend aus zwei oder mehreren der genannten besonders bevorzugten Homo-, Co- und Terpolymeren, gegebenenfalls gemischt mit einem oder mehreren der genannten Homo-, Co- und Terpolymeren,
enthält, wobei insbesondere Propylenhomopolymer oder

statistische Ethylen-Propylen-Copolymere mit

einem Ethylengehalt von 2 bis 10 Gew.-%, bevorzugt 5 bis 8 Gew.-%, oder

statistische Propylen-Butylen-1-Copolymere mit einem Butylengehalt von 4 bis 25 Gew.-%, bevorzugt 10 bis 20 Gew.-%,

jeweils bezogen auf das Gesamtgewicht des Copolymeren, oder statistische Ethylen-Propylen-Butylen-1-Terpolymere mit

einem Ethylengehalt von 1 bis 10 Gew.-%, bevorzugt 2 bis 6 Gew.-%, und

einem Butylen-1-Gehalt von 3 bis 20 Gew.-%, bevorzugt 8 bis 10 Gew.-%,

jeweils bezogen auf das Gesamtgewicht des Terpolymeren, oder

ein Blend aus einem Ethylen-Propylen-Butylen-1-Terpolymeren und einem Propylen-Butylen-1-Copolymeren

mit einem Ethylengehalt von 0,1 bis 7 Gew.-%

und einem Propylengehalt von 50 bis 90 Gew.-%

und einem Butylen-1-Gehalt von 10 bis 40 Gew.-%,

jeweils bezogen auf das Gesamtgewicht des Polymerblends,

bevorzugt sind.

**9.** Polypropylen-Mehrschichtfolie gemäß einem oder mehreren der Ansprüche 1 bis 8, **dadurch gekennzeichnet, daß** die Deckschicht ein HDPE mit einem MFI (50 N/190 °C) von 0,2 bis 50 g/10 min (gemessen nach DIN 53735), einer Viskositätszahl von 100 bis 450 cm$^3$/g (gemessen nach DIN 53 728, Teil 4), einer Dichte von 0,93 bis 0,97 g/cm$^3$ (gemessen nach DIN 53 479, Verfahren A), einem Kristallisationsgrad von 35 bis 80 % und einem Schmelzpunkt von 120 bis 150 °C nach DSC-Messung enthält.

**10.** Verfahren zur Herstellung der Polypropylen-Mehrschichtfolie gemäß Anspruch 1, bei dem die den einzelnen Schichten der Folie entsprechenden Schmelzen durch eine Flachdüse coextrudiert werden, die coextrudierte Folie über eine Abzugswalze, deren Temperatur zwischen 10 und 100 °C liegt, abgezogen wird, die Folie biaxial gestreckt wird mit einem Längsstreckverhältnis von 5:1 bis 9:1 und einem Querstreckverhältnis von 5:1 bis 9:1, die biaxial gestreckte Folie thermofixiert, gegebenenfalls coronabehandelt und anschließend aufgewickelt wird.

**11.** Verfahren gemäß Anspruch 10, **dadurch gekennzeichnet, daß** die Längsstreckung der Folie bei 80 bis 150 °C und die Querstreckung bei 120 bis 170°C durchgeführt wird.

**12.** Verfahren gemäß Anspruch 10 und/oder 11, **dadurch gekennzeichnet, daß** die Folie in etwa balanced orientiert ist.

**13.** Verwendung der Polypropylen-Mehrschichtfolie gemäß einem oder mehreren der Ansprüche 1 bis 9 für den Dreheinschlag.

**Claims**

**1.** Multilayered polypropylene film which comprises at least one base layer comprising polypropylene and hydrocarbon resin, and at least one top layer which comprises α-olefinic polymers having from 2 to 10 carbon atoms, **characterized in that** the hydrocarbon resin has a mean molecular weight of from 2000 to 8000, and the proportion of hydrocarbon resin having a molecular weight of less than 1000 is at most 35% by weight, based on the total weight of the hydrocarbon resin.

**2.** Multilayered polypropylene film according to Claim 1, **characterized in that** the hydrocarbon resin has a softening point of from 80 to 180°C, preferably from 100 to 160°C.

**3.** Multilayered polypropylene film according to Claim 1 or 2, **characterized in that** the hydrocarbon resin is added to the base layer in an amount of from 5 to 40% by weight, preferably from 10 to 35% by weight, in each case based on the weight of the base layer.

**4.** Multilayered polypropylene film according to one or more of Claims 1 to 3, **characterized in that** the multilayered film has a permanent elongation value of greater than 50%, preferably in the range from 50 to 90%, in the longitudinal and transverse directions.

5. Multilayered polypropylene film according to one or more of Claims 1 to 4, **characterized in that** the multilayered film has approximately isotropic mechanical properties.

6. Multilayered polypropylene film according to one or more of Claims 1 to 5, **characterized in that** the polypropylene polymer of the base layer has a melting point of at least 140°C, and the melt flow index is in the range from 0.5 to 8 g/10 min.

7. Multilayered polypropylene film according to one or more of Claims 1 to 6, **characterized in that** the top layer comprises
　　　a propylene homopolymer or
　　　a copolymer of
　　　　　ethylene and propylene or
　　　　　ethylene and butylene or
　　　　　propylene and butylene or
　　　　　ethylene and another $\alpha$-olefin having from 5 to 10 carbon atoms or
　　　　　propylene and another $\alpha$-olefin having from 5 to 10 carbon atoms or
　　　a terpolymer of
　　　　　ethylene and propylene and butylene or
　　　　　ethylene and propylene and another $\alpha$-olefin having from 5 to 10 carbon atoms or
　　　a mixture of two or more of the said homopolymers, copolymers and terpolymers or
　　　a blend of two or more of the said homopolymers, copolymers and terpolymers, optionally mixed with one
or more of the said homopolymers, copolymers and terpolymers.

8. Multilayered polypropylene film according to one or more of Claims 1 to 7, **characterized in that**
the top layer essentially consists of
　　　a propylene homopolymer or
　　　a copolymer of
　　　　　ethylene and propylene or
　　　　　ethylene and 1-butylene or
　　　　　propylene and 1-butylene or
　　　a terpolymer of
　　　　　ethylene and propylene and 1-butylene or
　　　a mixture of two or more of the said particularly preferred homopolymers, copolymers and terpolymers or
　　　a blend of two or more of the said particularly preferred homopolymers, copolymers and terpolymers, optionally mixed with one or more of the said homopolymers, copolymers and terpolymers,
　　　particular preference being given to propylene homopolymer or
　　　　　random ethylene-propylene copolymers having
　　　　　　　an ethylene content of from 2 to 10% by weight, preferably from 5 to 8% by weight, or
　　　　　random propylene-1-butylene copolymers having
　　　　　　　a butylene content of from 4 to 25% by weight, preferably from 10 to 20% by weight,
　　　　　　　in each case based on the total weight of the copolymer, or
　　　　　random ethylene-propylene-1-butylene terpolymers having
　　　　　　　an ethylene content of from 1 to 10% by weight, preferably from 2 to 6% by weight, and
　　　　　　　a 1-butylene content of from 3 to 20% by weight, preferably from 8 to 10% by weight,
　　　　　　　in each case based on the total weight of the terpolymer, or
　　　　　a blend of an ethylene-propylene-1-butylene terpolymer and a propylene-1-butylene copolymer
　　　　　　　having an ethylene content of from 0.1 to 7% by weight
and a propylene content of from 50 to 90% by weight
and a 1-butylene content of from 10 to 40% by weight,
in each case based on the total weight of the polymer blend.

9. Multilayered polypropylene film according to one or more of Claims 1 to 8, **characterized in that** the top layer comprises an HDPE having an MFI (50 N/190°C) of from 0.2 to 50 g/10 min (measured in accordance with DIN 53 735), a viscosity number of from 100 to 450 $cm^3$/g (measured in accordance with DIN 53 728, Part 4), a density of from 0.93 to 0.97 g/$cm^3$ (measured in accordance with DIN 53 479, method A), a degree of crystallization of from 35 to 80% and a melting point of from 120 to 150°C, determined by DSC measurement.

10. Process for the production of the multilayered polypropylene film according to Claim 1, in which the melts corresponding to the individual layers of the film are coextruded through a flat-film die, the coextruded film is taken off over a take-off roll whose temperature is between 10 and 100°C, the film is biaxially stretched with a longitudinal stretching ratio of from 5:1 to 9:1 and a transverse stretching ratio of from 5:1 to 9:1, and the biaxially stretched film is heat-set, optionally corona-treated and subsequently wound up.

11. Process according to Claim 10, **characterized in that** the longitudinal stretching of the film is carried out at from 80 to 150°C and the transverse stretching is carried out at from 120 to 170°C.

12. Process according to Claim 10 and/or 11, **characterized in that** the film is oriented in an approximately balanced manner.

13. Use of the multilayered polypropylene film according to one or more of Claims 1 to 9 for twist wrapping.

**Revendications**

1. Film multicouches de polypropylène, lequel comporte au moins une couche de base contenant du polypropylène et de la résine d'hydrocarbure, et au moins une couche de surface, laquelle contient des polymères $\alpha$-oléfiniques avec 2 à 10 atomes de carbone, **caractérisé en ce que** la résine d'hydrocarbure a une masse moléculaire relative moyenne de 2.000 à 8.000 et que la part de résine d'hydrocabure avec une masse moléculaire de moins de 1.000 s'élève à tout au plus 35 % en poids, rapporté au poids total de la résine d'hydrocarbure.

2. Film multicouches de polypropylène selon la revendication 1, **caractérisé en ce que** la résine d'hydrocarbure a un point de ramollissement de 80 à 180 °C, de préférence de 100 à 160 °C.

3. Film multicouches de polypropylène selon l'une des revendications 1 ou 2, **caractérisé en ce que** la résine d'hydrocarbure est rajoutée à la couche de base dans une quantité de 5 à 40 % en poids, de préférence de 10 à 35 % en poids, rapporté respectivement au poids de la couche de base.

4. Film multicouches de polypropylène selon l'une ou plusieurs des revendications 1 à 3, **caractérisé en ce que** le film multicouches a dans le sens longitudinal et dans le sens transversal une valeur d'élongation permanente de plus de 50 %, de préférence dans une plage de 50 à 90 %.

5. Film multicouches de polypropylène selon l'une ou plusieurs des revendications 1 à 4, **caractérisé en ce que** le film multicouches a des propriétés mécaniques approximativement isotropes.

6. Film multicouches de polypropylène selon l'une ou plusieurs des revendications 1 à 5, **caractérisé en ce que** le polymère de polypropylène de la couche de base possède un point de fusion d'au moins 140 °C et l'indice de fluidité à chaud se situe dans une plage de 0,5 à 8 g/10 min.

7. Film multicouches de polypropylène selon l'une ou plusieurs des revendications 1 à 6, **caractérisé en ce que** la couche de surface contient
 un homopolymère de propylène ou
 un copolymère
  d'éthylène et de propylène ou
  d'éthylène et de butylène ou
  de propylène et de butylène ou
  d'éthylène et d'une autre $\alpha$-oléfine avec 5 à 10 atomes de carbone ou
  de propylène et d'une autre $\alpha$-oléfine avec 5 à 10 atomes de carbone ou
 un terpolymère
  d'éthylène et de propylène et de butylène ou
  d'éthylène et de propylène et d'une autre $\alpha$-oléfine avec 5 à 10 atomes de carbone ou
 un mélange de deux ou plusieurs des homopolymères, copolymères ou terpolymères cités ou
 un blend de deux ou plusieurs des homopolymères, copolymères ou terpolymères cités, le cas échéant mélangé avec l'un ou plusieurs des homopolymères, copolymères ou terpolymères cités.

8. Film multicouches de polypropylène selon l'une ou plusieurs des revendications 1 à 7, **caractérisé en ce que** la couche de surface contient pour l'essentiel

un homopolymère de propylène ou

un copolymère

d'éthylène et de propylène ou

d'éthylène et de butylène-1 ou

un terpolymère

d'éthylène et de propylène et de butylène-1 ou

un mélange de deux ou plusieurs des homopolymères, copolymères et terpolymères particulièrement préférés cités ou

un blend de deux ou plusieurs des homopolymères, copolymères et terpolymères particulièrement préférés cités, le cas échéant mélangé avec l'un ou plusieurs des homopolymères, copolymères ou terpolymères cités.

étant particulièrement préférés un homopolymère de propylène ou

des copolymères d'éthylène propylène statistiques

avec une teneur en éthylène de 2 à 10 % en poids, de préférence de 5 à 8 % en poids ou

des copolymères de propylène-butylène-1 statistiques

avec une teneur en butylène de 4 à 25 %, de préférence de 10 à 20 %, rapportés respectivement au poids total du copolymère, ou

des terpolymères d'éthylène-propylène-butylène-1 statistiques

avec une teneur en éthylène de 1 à 10 % en poids, de préférence de 2 à 6 % en poids, et

une teneur en butylène-1 de 3 à 20 % en poids, de préférence de 8 à 10 % en poids,

rapportés respectivement au poids total du terpolymère ou

un blend d'un terpolymère d'éthylène-propylène-butylène-1 et d'un

copolymère de propylène-butylène-1

avec une teneur en éthylène de 0,1 à 7 % en poids

et une teneur en propylène de 50 à 90 % en poids

et une teneur en butylène-1 de 10 à 40 % en poids,

rapportés respectivement au poids total du blend polymère.

9. Film multicouches de polypropylène selon l'une ou plusieurs des revendications 1 à 8, **caractérisé en ce que** la couche de surface est un PEHD avec un MFI (50 N/190 °C) de 0,2 à 50 g/10 min (mesuré selon DIN 53 735), un indice de viscosité de 100 à 450 cm$^3$/g (mesuré selon DIN 53 728, Partie 4), une densité de 0,93 à 0,97 g/cm$^3$ (mesurée selon DIN 53 479, méthode A), un degré de cristallisation de 35 à 80 % et un point de fusion de 120 à 150 °C d'après une mesure DSC.

10. Procédé destiné à la fabrication d'un film multicouches de polypropylène selon la revendication 1, dans lequel les matières fondues correspondant à chacune des couches sont coextrudées à travers une filière plate, le film coextrudé est débité par un rouleau débiteur dont la température se situe entre 10 et 100 °C, le film est étiré biaxialement dans un rapport d'étirage longitudinal de 5 à 1 jusqu'à 9 à 1 et un rapport d'étirage transversal de 5 à 1 jusqu'à 9 à 1, le film biaxialement étiré est thermofixé, le cas échéant traité corona et ensuite bobiné.

11. Procédé selon la revendication 10, **caractérisé en ce que** l'étirage longitudinal du film est effectué à une température de 80 à 150 °C et l'étirage transversal à une température de 120 à 170 °C.

12. Procédé selon la revendication 10 et/ou 11, **caractérisé en ce que** le film est orienté de façon approximativement équilibrée.

13. Utilisation d'un film multicouches de polypropylène selon l'une ou l'autre des revendications 1 à 9 pour enveloppage à torsion.

FIG. 1

Regalrez 1139

FIG. 2

Escorez 356

EP 0 627 305 B1

FIG. 3

Probe: 00523233

%I(M) 100

Eich-Datei: C1.EIC

Int.Standard: 36.60ml

Arkon P 125

Mn = 9.4410E 02
Mw= 1.3458E 03
Mz = 1.8697E 03
Mv = 1.2798E 03

22

EP 0 627 305 B1

KRAFT

x%    10%    DEHNUNG